(19) Europäisches Patentamt
European Patent Office
Office européen des brevets

(11) **EP 2 651 733 B1**

(12) **EUROPÄISCHE PATENTSCHRIFT**

(45) Veröffentlichungstag und Bekanntmachung des Hinweises auf die Patenterteilung:
**25.02.2015 Patentblatt 2015/09**

(21) Anmeldenummer: **11793413.3**

(22) Anmeldetag: **05.12.2011**

(51) Int Cl.:
**B60T 13/74** *(2006.01)*

(86) Internationale Anmeldenummer:
**PCT/EP2011/071777**

(87) Internationale Veröffentlichungsnummer:
**WO 2012/080025 (21.06.2012 Gazette 2012/25)**

(54) **VERFAHREN ZUM EINSTELLEN DER VON EINER FESTSTELLBREMSE AUSGEÜBTEN KLEMMKRAFT**

METHOD FOR ADJUSTING THE CLAMPING FORCE APPLIED BY A PARKING BRAKE

PROCÉDÉ PERMETTANT D'AJUSTER LA FORCE DE SERRAGE EXERCÉE PAR UN FREIN DE STATIONNEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.12.2010 DE 102010063404**

(43) Veröffentlichungstag der Anmeldung:
**23.10.2013 Patentblatt 2013/43**

(73) Patentinhaber: **Robert Bosch GmbH
70442 Stuttgart (DE)**

(72) Erfinder:
• **BIELTZ, Karsten
74395 Mudelsheim (DE)**
• **HAUBER, Simon
71691 Freibergam Neckar (DE)**

(56) Entgegenhaltungen:
**DE-A1- 10 345 485     DE-B3- 10 361 042
US-B1- 6 311 808**

EP 2 651 733 B1

**Beschreibung**

Die Erfindung bezieht sich auf ein Verfahren zum Einstellen der von einer Feststellbremse ausgeübten Klemmkraft in einem Fahrzeug.

Stand der Technik

Aus der DE 103 61 042 B3 ist eine elektromechanische Feststellbremse bekannt, die als Aktuator einen elektrischen Bremsmotor aufweist, bei dessen Betätigung ein Bremskolben, welcher Träger eines Bremsbelages ist, axial in Richtung auf eine Bremsscheibe verstellt wird. Die Höhe der elektromechanischen Bremskraft kann über die Bestromung des Bremsmotors eingestellt werden.

Darüber hinaus ist es bekannt, elektromechanische Feststellbremsen mit einer hydraulischen Fahrzeugbremse zu koppeln, indem der Bremskolben der Feststellbremse zusätzlich von Hydraulikdruck beaufschlagt wird, so dass sich die gesamte zu stellende Klemmkraft aus einem elektromechanischen Anteil und einem hydraulischen Anteil zusammensetzt. Der hydraulische Anteil an der Klemmkraft wird bedarfsweise und ergänzend zum elektromechanischen Anteil bereitgestellt. Für eine präzise Einstellung der Klemmkraft ist es erforderlich, eine möglichst genaue Kenntnis von der hydraulischen Klemmkraftunterstützung zu haben.

Offenbarung der Erfindung

Der Erfindung liegt die Aufgabe zugrunde, mit einfachen Maßnahmen die Klemmkraft in einer Feststellbremse mit elektromechanischer Bremsvorrichtung bei zusätzlicher hydraulischer Unterstützung mit ausreichender Genauigkeit bereitzustellen.

Diese Aufgabe wird erfindungsgemäß mit den Merkmalen des Anspruches 1 gelöst. Die Unteransprüche geben zweckmäßige Weiterbildungen an.

Das erfindungsgemäße Verfahren bezieht sich auf eine elektromechanische Feststellbremse in einem Fahrzeug, die einen elektrischen Aktuator aufweist, über den eine Klemmkraft zum Festsetzen des Fahrzeugs im Stillstand erzeugbar ist. Bei dem elektromechanischen Aktuator handelt es sich vorzugsweise um einen elektrischen Bremsmotor, dessen Rotationsbewegung in eine axiale Stellbewegung eines Bremskolbens umgesetzt wird, der Träger eines Bremsbelages ist und gegen eine Bremsscheibe gedrückt wird. Grundsätzlich kommen aber auch sonstige elektrische Aktuatoren in Betracht, beispielsweise elektromagnetische Stellglieder.

Die Klemmkraft wird grundsätzlich zumindest teilweise von dem elektromechanischen Aktuator gestellt. Bedarfsweise und ergänzend kann ein Klemmkraftanteil auch von einer hydraulischen Bremsvorrichtung erzeugt werden, deren hydraulischer Bremsdruck vorzugsweise ebenfalls auf den Bremskolben wirkt und dadurch unterstützend zur elektromechanischen Klemmkraft hinzutritt. Wird die hydraulische Bremsvorrichtung aktiv, so setzt sich die Gesamtklemmkraft aus einem elektromechanischen Anteil und einem hydraulischen Anteil zusammen.

Bei der hydraulischen Bremsvorrichtung handelt es sich vorzugsweise um die reguläre hydraulische Fahrzeugbremse.

Bei zeitgleicher Betätigung von elektrischem Aktuator zur Erzeugung einer elektromechanischen Klemmkraft und hydraulischer Bremsvorrichtung zur Erzeugung einer hydraulischen Klemmkraft kommt es zu einer wechselseitigen Beeinflussung zwischen diesen Bremssystemen. Durch die Vorwärtsbewegung des Bremskolbens wird der Raum für das hydraulische Volumen vergrößert, was mit einem hydraulischen Druckabfall einhergeht. Erfindungsgemäß wird bei einer ergänzenden hydraulischen Klemmkraftunterstützung ein in der hydraulischen Bremsvorrichtung zu erzeugender Unterstützungsdruck generiert, der um einen anwendungsspezifischen Druckbetrag gegenüber dem Druck im Abschaltzeitpunkt erhöht ist. Im Abschaltzeitpunkt wird der elektrische Aktuator abgeschaltet und dadurch die erzeugte Gesamtklemmkraft eingefroren, wobei ein Stellglied des Aktuators in seiner aktuellen Position verriegelt wird bzw. verharrt.

Die Erhöhung des von der hydraulischen Bremsvorrichtung zu stellenden Unterstützungsdrucks um den anwendungsspezifischen Druckbetrag kompensiert den Druckabfall, der während der Zustellbewegung des Bremskolbens in Richtung auf die Bremsscheibe aufgrund der Volumenvergrößerung erfolgt. Der Druckbetrag, um den der Unterstützungsdruck erhöht wird, nimmt hierbei einen konstanten Wert ein, unabhängig von dem absoluten Druckniveau, welches in der hydraulischen Bremsvorrichtung anliegt. Damit ist es möglich, für die jeweilige Feststellbremse vorab den Druckbetrag zu ermitteln, um den sich der Hydraulikdruck bei der Vorwärtsbewegung des Bremskolbens typischerweise reduziert. Da der Druckabfall für die jeweilige Feststellbremse immer konstant ist, kann der entsprechende Druckbetrag unabhängig vom aktuell herrschenden Druckniveau durch Addition auf den Abschaltdruck berücksichtigt werden, welcher den hydraulischen Klemmkraftanteil stellt. Wird beispielsweise ein bestimmter hydraulischer Klemmkraftanteil an der Gesamtklemmkraft gefordert, wobei der hydraulische Klemmkraftanteil sich aus dem hydraulischen Abschaltdruck bestimmt, so kann zu dem bekannten Abschaltdruck der Druckbetrag addiert werden, um den Unterstützungsdruck zu erhalten, welcher von der hydraulischen Bremsvorrichtung erzeugt werden muss.

Gemäß einer zweckmäßigen Ausführung ist vorgesehen, dass auch ein vom Fahrer durch Bremspedalbetätigung aufgeprägter hydraulischer Vordruck von dem zu stellenden Abschaltdruck subtrahiert wird. Um den gewünschten Abschaltdruck zu erreichen, muss nur ein Unterstützungsdruck generiert werden, der um den Betrag des Vordrucks reduziert ist.

Der hydraulische Unterstützungsdruck kann entweder bereits vor dem Erzeugen der elektromechanischen Klemmkraft oder erst nach dem Aktivieren der elektromechanischen Bremsvorrichtung bereitgestellt bzw. erzeugt werden. Wird der Unterstützungsdruck bereits vor dem Aktivieren der elektromechanischen Bremsvorrichtung gestellt, so steht insgesamt ein längerer Zeitraum für den Druckaufbau zur Verfügung, was mit einer kleineren Hydraulikpumpenleistung und einer geringeren Geräuschentwicklung einhergeht. Wird dagegen erst nach dem Aktivieren der elektromechanischen Bremsvorrichtung der hydraulische Unterstützungsdruck erzeugt, so steht zwar nur ein geringerer Zeitraum zur Druckgenerierung zur Verfügung, was mit einer höheren Pumpenleistung und einer größeren Geräuschentwicklung einhergeht. Allerdings kann der Druckaufbau in eine Leerlauf- bzw. Leerwegphase der elektromechanischen Bremsvorrichtung gelegt werden, wodurch die gesamte Zeitdauer für die Bereitstellung der Gesamtklemmkraft reduziert ist.

Es kann zweckmäßig sein, bei der Bereitstellung des hydraulischen Unterstützungsdrucks auch Drucktoleranzen zu berücksichtigen, die beispielsweise aus Modell- oder Messungenauigkeiten herrühren. Der Unterstützungsdruck wird um den Betrag der Drucktoleranz erhöht, um sicherzustellen, dass der geforderte Abschaltdruck erreicht wird.

Das erfindungsgemäße Verfahren läuft in einem Regel- bzw. Steuergerät im Fahrzeug ab, das Bestandteil des Feststellbremssystems sein kann.

Weitere Vorteile und zweckmäßige Ausführungen sind den weiteren Ansprüchen, der Figurenbeschreibung und den Zeichnungen zu entnehmen. Es zeigen:

Fig. 1 einen Schnitt durch eine elektromechanische Feststellbremse für ein Fahrzeug, bei der die Klemmkraft über einen elektrischen Bremsmotor erzeugt wird,

Fig. 2 ein Schaubild mit dem zeitabhängigen Verlauf des Stroms, der Spannung und der Motordrehzahl beim Zuspannvorgang der Feststellbremse sowie mit einem Hydraulikdruck aus einer hydraulischen Bremsvorrichtung, wobei der Hydraulikdruck vor dem Erzeugen der elektromechanischen Klemmkraft bereitgestellt wird,

Fig. 3 ein Fig.2 entsprechendes Schaubild, wobei der Hydraulikdruck erst in einer Leerwegphase der elektromechanischen Bremsvorrichtung während des Zustellvorgangs erzeugt wird.

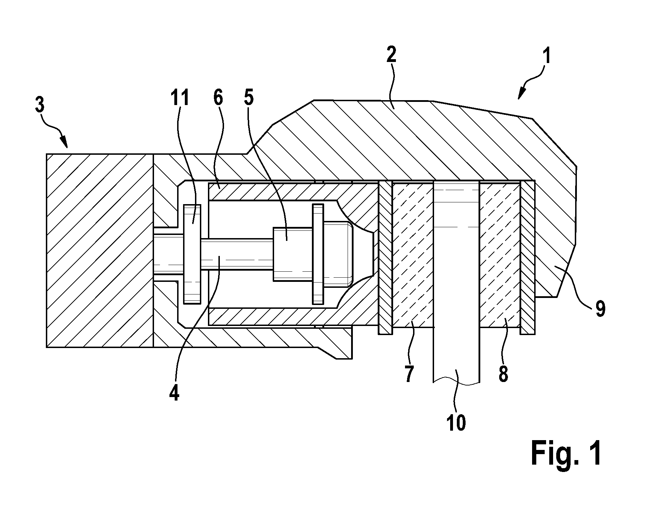

In Fig. 1 ist eine elektromechanische Feststellbremse 1 zum Festsetzen eines Fahrzeugs im Stillstand dargestellt. Die Feststellbremse 1 umfasst einen Bremssattel 2 mit einer Zange 9, welche eine Bremsscheibe 10 übergreift. Als Stellglied weist die Feststellbremse 1 einen Elektromotor als Bremsmotor 3 auf, der eine Spindel 4 rotierend antreibt, auf der ein Spindelbauteil 5 drehbar gelagert ist. Bei einer Rotation der Spindel 4 wird das Spindelbauteil 5 axial verstellt. Das Spindelbauteil 5 bewegt sich innerhalb eines Bremskolbens 6, der Träger eines Bremsbelags 7 ist, welcher von dem Bremskolben 6 gegen die Bremsscheibe 10 gedrückt wird. Auf der gegenüberliegenden Seite der Bremsscheibe 10 befindet sich ein weiterer Bremsbelag 8, der ortsfest an der Zange 9 gehalten ist.

Innerhalb des Bremskolbens 6 kann sich das Spindelbauteil 5 bei einer Drehbewegung der Spindel 4 axial nach vorne in Richtung auf die Bremsscheibe 10 zu bzw. bei einer entgegen gesetzten Drehbewegung der Spindel 4 axial nach hinten bis zum Erreichen eines Anschlags 11 bewegen. Zum Erzeugen einer Klemmkraft beaufschlagt das Spindelbauteil 5 die innere Stirnseite des Bremskolbens 6, wodurch der axial verschieblich in der Feststellbremse 1 gelagerte Bremskolben 6 mit dem Bremsbelag 7 gegen die zugewandte Stirnfläche der Bremsscheibe 10 gedrückt wird.

Die Feststellbremse kann erforderlichenfalls von einer hydraulischen Fahrzeugbremse unterstützt werden, so dass sich die Klemmkraft aus einem elektromotorischen Anteil und einem hydraulischen Anteil zusammensetzt. Bei der hydraulischen Unterstützung wird die dem Bremsmotor zugewandte Rückseite des Bremskolbens 6 mit unter Druck stehendem Hydraulikfluid beaufschlagt.

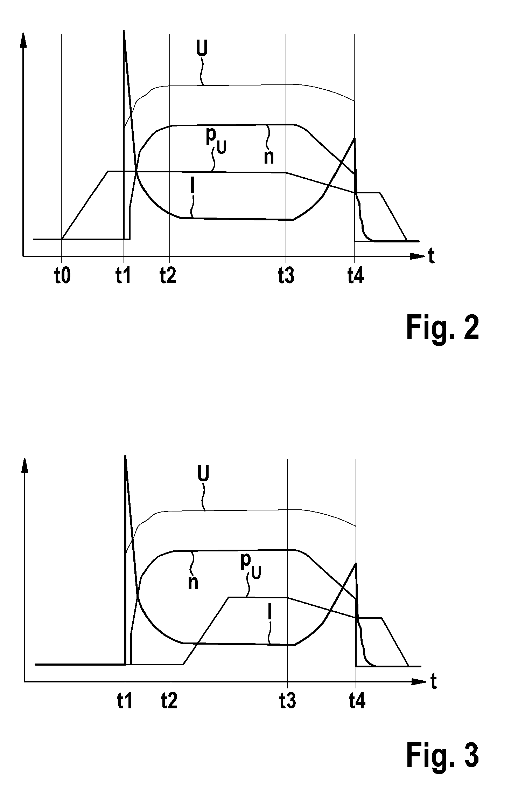

In Fig. 2 und 3 ist jeweils ein Schaubild mit dem Stromverlauf I, der Spannung U und dem Drehzahlverlauf n des elektrischen Bremsmotors zeitabhängig für einen Zuspannvorgang dargestellt. Zum Zeitpunkt t1 beginnt der Zuspannvorgang, indem eine elektrische Spannung aufgebracht und der Bremsmotor bei geschlossenem Stromkreis unter Strom gesetzt wird. Zum Zeitpunkt t2 haben die Spannung U und die Motordrehzahl n ihr Maximum erreicht. Die Phase zwischen t2 und t3 stellt die Leerlaufphase dar, in welcher der Strom I sich auf einem Minimumniveau bewegt. Daran schließt sich ab dem Zeitpunkt t3 die Kraftaufbauphase bis zum Zeitpunkt t4 an, in der die Bremsbeläge an der Bremsscheibe anliegen und mit zunehmender Klemmkraft F gegen die Bremsscheibe gedrückt werden. Zum Zeitpunkt t4 erfolgt das Abschalten des elektrischen Bremsmotors durch Öffnen des Stromkreises, so dass im weiteren Verlauf die Drehzahl n des Bremsmotors bis auf Null abfällt.

Mit der Phase des Kraftaufbaus zum Zeitpunkt t3 fällt der Kraftanstiegspunkt zusammen. Der Kraftaufbau bzw. der Verlauf der Klemmkraft F kann beispielsweise anhand des Verlaufs des Strom I des Bremsmotors ermittelt werden, der grundsätzlich den gleichen Verlauf wie die elektromechanische Klemmkraft aufweist. Ausgehend von dem niedrigen Niveau während der Leerphase zwischen t2 und t3 steigt der Stromverlauf zu Beginn des Zeitpunktes t3 steil an. Dieser Anstieg des Stroms kann detektiert und zum Bestimmen des Kraftanstiegspunktes herangezogen werden. Grundsätzlich kann der Verlauf des Kraftaufbaus aber auch aus dem Spannungs- oder Drehzahlverlauf bzw. aus einer beliebigen Kombination der Signale Strom, Spannung und Drehzahl bestimmt werden.

In den Fig. 2 und 3 ist außerdem der Kurvenverlauf für einen Unterstützungsdruck $p_U$ dargestellt, welcher von der hydraulischen Bremsvorrichtung erzeugt wird, um zusätzlich zu der elektromechanischen Klemmkraft auch eine hydraulische Klemmkraft zu generieren, die sich mit der elektromechanischen Klemmkraft zur Gesamtklemmkraft addiert. Hierbei wird über die Fahrzeugbremse ein Hydraulikdruck gestellt, der auf die Rückseite des Bremskolbens wirkt und die elektromechanisch gestellte Klemmkraft unterstützt. Der Unterstützungsdruck $p_U$, welcher von der hydraulischen Bremsvorrichtung erzeugt werden muss, um eine bestimmte, geforderte hydraulische Klemmkraft zu erzielen, setzt sich gemäß

$$p_U = p_{t,off} + \Delta p + p_{tol} - p_{Vor}$$

aus einem Abschaltdruck $p_{t,off}$, einem Druckbetrag $\Delta p$ und einem Toleranzdruck $p_{tol}$ additiv zusammen. Zusätzlich wird der Vordruck $p_{Vor}$ im hydraulischen System berücksichtigt, welcher vom Fahrer über eine Bremspedalbetätigung im Zeitpunkt des Zustellens des elektrischen Bremsmotors aufgebracht wird; der Vordruck $p_{Vor}$ wird subtrahiert, da über den Unterstützungsdruck nur die Differenz zwischen Vordruck und dem absoluten, zu erreichenden Druckniveau generiert werden muss. Der Abschaltdruck $p_{t,off}$ ist der am Bremskolben wirksame Druck im Zeitpunkt des Abschaltens des elektrischen Bremsmotors, der unmittelbar mit der hydraulischen Klemmkraft korrespondiert. $\Delta p$ stellt einen konstanten Druckbetrag dar, welcher den Druckabfall kennzeichnet, der im hydraulischen System aufgrund der Vorwärtsbewegung des Bremskolbens während des Zustellens und der damit einhergehenden Volumenvergrößerung entsteht. Der Druckabfall $\Delta p$ ist unabhängig von dem Druckniveau für die jeweilige Fahrzeugbremse immer konstant und liegt beispielsweise in einem Wertebereich zwischen 10 bar und 20 bar. Über die Drucktoleranz $p_{tol}$ können Modell- und Messungenauigkeiten berücksichtigt werden.

Der in den Fig. 2 und 3 dargestellte Verlauf des Unterstützungsdrucks $p_U$ korrespondiert auch mit dem Abschaltdruck $p_{t,off}$. Wie Fig. 2 zu entnehmen, wird in einer ersten Ausführungsvariante der Unterstützungsdruck $p_U$ bereits vor dem Aktivieren des elektrischen Bremsmotors gestellt. Hierzu steigt der Unterstützungsdruck $p_U$ bereits zu einem Zeitpunkt t0 an, der vor dem Zeitpunkt t1 liegt, zu dem der Zuspannvorgang im elektromechanischen Bremssystem startet. Der Unterstützungsdruck $p_U$ ist bereits im Zeitpunkt t1 erreicht und wird bis zum Zeitpunkt t3, in welchem der Kraftaufbau im elektromechanischen Bremssystem erfolgt, beibehalten. Bis zum Zeitpunkt t4 - dem Abschaltzeitpunkt - sinkt der Unterstützungsdruck $p_U$ ab, was auf die Volumenvergrößerung aufgrund der Vorschubbewegung des Bremskolbens zurückzuführen ist. Der Druckabfall im Verlauf von $p_U$ zwischen den Zeitpunkten t3 und t4 entspricht dem Druckbetrag $\Delta p$.

In der Ausführungsvariante gemäß Fig. 3 wird der Unterstützungsdruck $p_U$ in der hydraulischen Bremsvorrichtung erst während der Leerlaufphase zwischen den Zeitpunkten t2 und t3 erzeugt. Nach dem Zeitpunkt t2 beginnt der Druckaufbau, der vor Beendigung der Leerlaufphase im Zeitpunkt t3 mit dem Erreichen des vollen Unterstützungsdrucks $p_U$ endet. In der Kraftaufbauphase zwischen den Zeitpunkten t3 und t4 sinkt wie bei Fig. 2 das Druckniveau des Unterstützungsdrucks $p_U$ aufgrund der Volumenvergrößerung wieder ab. Im Zeitpunkt t4 ist der Abschaltdruck $p_{t,off}$ erreicht.

**Patentansprüche**

1. Verfahren zum Einstellen der von einer Feststellbremse (1) ausgeübten Klemmkraft, die zumindest teilweise von einer elektromechanischen Bremsvorrichtung mit einem elektrischen Aktuator (3) und bedarfsweise ergänzend von einer hydraulischen Bremsvorrichtung erzeugt wird, wobei im Falle einer Betätigung der hydraulischen Bremsvorrichtung ein hydraulischer Druck an einem Bremskolben (6) unterstützend wirksam ist, der von dem elektrischen Aktuator (3) verstellt wird, und sich die Gesamtklemmkraft aus der elektromechanischen Klemmkraft und der hydraulischen Klemmkraft zusammensetzt, **dadurch gekennzeichnet, dass** bei der Bereitstellung der hydraulischen Klemmkraft ein in der hydraulischen Bremsvorrichtung zu erzeugender Unterstützungsdruck ($p_U$) um einen konstanten Druckbetrag ($\Delta p$) gegenüber einem mit der hydraulischen Klemmkraft korrespondierenden Abschaltdruck ($p_{t,off}$) im Abschaltzeitpunkt erhöht wird.

2. Verfahren nach Anspruch 1, **dadurch gekennzeichnet, dass** ein vom Fahrer durch Bremspedalbetätigung aufgeprägter hydraulischer Vordruck ($p_{vor}$) von dem zu stellenden Abschaltdruck ($p_{toff}$) subtrahiert wird.

3. Verfahren nach Anspruch 1 oder 2, **dadurch gekennzeichnet, dass** der hydraulische Unterstützungsdruck ($p_U$) bereits vor dem Erzeugen der elektromechanischen Klemmkraft bereitgestellt wird.

4. Verfahren nach einem der Ansprüche 1 bis 3, **dadurch gekennzeichnet, dass** der hydraulische Unterstützungsdruck ($p_U$) erst nach dem Aktivieren der elektromechanischen Bremsvorrichtung erzeugt wird.

5. Verfahren nach Anspruch 4, **dadurch gekennzeichnet, dass** der hydraulische Unterstützungsdruck ($p_U$) in einer Leerwegphase der elektromechanischen Bremsvorrichtung während des Zustellvorgangs erzeugt wird.

6.  Verfahren nach einem der Ansprüche 1 bis 5, **dadurch gekennzeichnet, dass** bei der Bereitstellung des hydraulischen Unterstützungsdrucks ($p_U$) Drucktoleranzen ($p_{tol}$) berücksichtigt werden.

7.  Verfahren nach einem der Ansprüche 1 bis 6, **dadurch gekennzeichnet, dass** der Druckbetrag ($\Delta p$) anwendungsspezifisch zwischen 10 bar und 20 bar beträgt.

8.  Regel- bzw. Steuergerät zur Durchführung des Verfahrens nach einem der Ansprüche 1 bis 7, **dadurch gekennzeichnet, dass** Mittel zur Erhöhung eines in der hydraulischen Bremsvorrichtung zu erzeugenden Unterstützungsdrucks (pU) um einen konstanten Druckbetrag ($\Delta p$) gegenüber einem mit der hydraulischen Klemmkraft korrespondierenden Abschaltdruck (pt,off) im Abschaltzeitpunkt bei der Bereitstellung der hydraulischen Klemmkraft vorgesehen sind.

9.  Feststellbremse in einem Fahrzeug mit einem Regel- bzw. Steuergerät nach Anspruch 8.


## Claims

1.  Method for adjusting the clamping force applied by a parking brake (1), which clamping force is generated at least partially by an electromechanical brake device with an electrical actuator (3) and, if necessary, additionally by a hydraulic brake device, wherein in the event of activation of the hydraulic brake device a hydraulic pressure is active at a brake piston (6) in a supporting fashion, which brake piston (6) is adjusted by an electrical actuator (3), and the total clamping force is composed of the electromechanical clamping force and the hydraulic clamping force, **characterized in that** when the hydraulic clamping force is made available a boosting pressure ($p_U$) to be generated in the hydraulic brake device is increased at the deactivation time by a constant absolute pressure value ($\Delta p$) compared to a deactivation pressure ($p_{t,off}$) corresponding to the hydraulic clamping force.

2.  Method according to Claim 1, **characterized in that** a hydraulic admission pressure ($p_{adm}$), which is applied by the driver by brake pedal activation, is subtracted from the deactivation pressure ($P_{t,off}$) to be set.

3.  Method according to Claim 1 or 2, **characterized in that** the hydraulic boosting pressure ($p_U$) is already made available before the electromechanical clamping force is generated.

4.  Method according to one of Claims 1 to 3, **characterized in that** the hydraulic boosting pressure ($p_U$) is not generated until after the electromechanical brake device is activated.

5.  Method according to Claim 4, **characterized in that** the hydraulic boosting pressure ($p_U$) is generated in an idle-travel phase of the electromechanical brake device during the brake application process.

6.  Method according to one of Claims 1 to 5, **characterized in that** pressure tolerances ($p_{tol}$) are taken into account in the provision of the hydraulic boosting force ($p_U$).

7.  Method according to one of Claims 1 to 6, **characterized in that** the absolute pressure value ($\Delta p$) is between 10 bar and 20 bar on an application-specific basis.

8.  Closed-loop or open-loop control device for carrying out the method according to one of Claims 1 to 7, **characterized in that** means for increasing a boosting pressure ($p_U$) to be generated in the hydraulic brake device by a constant absolute pressure value ($\Delta p$) compared to a deactivation pressure ($p_{t,off}$) corresponding to the hydraulic clamping force are provided at the deactivation time when the hydraulic clamping force is made available.

9.  Parking brake in a vehicle having a closed-loop and/or open-loop control device according to Claim 8.


## Revendications

1.  Procédé permettant d'ajuster la force de serrage exercée par un frein de stationnement (1), laquelle est générée au moins partiellement par un dispositif de freinage électromécanique comprenant un actionneur électrique (3) et, au besoin, en complément, par un dispositif de freinage hydraulique, une pression hydraulique agissant de manière à assister un piston de frein (6) dans le cas d'un actionnement du dispositif de freinage hydraulique, lequel piston de frein est déplacé par l'actionneur électrique (3), et la force de serrage totale se composant de la force de serrage mécanique et de la force de serrage hydraulique, **caractérisé en ce qu'**en cas de fourniture de la force de serrage hydraulique, une pression d'assistance ($p_U$) à générer dans le dispositif de freinage hydraulique est augmentée d'une valeur de pression constante ($\Delta p$) par rapport à une pression d'arrêt ($p_{t,off}$), correspondant à la force de serrage hydraulique, à l'instant d'arrêt.

2. Procédé selon la revendication 1, **caractérisé en ce qu'**une pression hydraulique initiale ($p_{vor}$) appliquée par un conducteur par actionnement de la pédale de frein est soustraite à la pression d'arrêt ($p_{t,off}$) à ajuster.

3. Procédé selon la revendication 1 ou 2, **caractérisé en ce que** la pression d'assistance hydraulique ($p_U$) est fournie déjà avant la génération de la force de serrage électromécanique.

4. Procédé selon l'une quelconque des revendications 1 à 3, **caractérisé en ce que** la pression d'assistance hydraulique ($p_U$) est générée seulement après l'activation du dispositif de freinage électromécanique.

5. Procédé selon la revendication 4, **caractérisé en ce que** la pression d'assistance hydraulique ($p_U$) est générée lors d'une phase de course à vide du dispositif de freinage électromécanique pendant l'opération d'avance.

6. Procédé selon l'une quelconque des revendications 1 à 5, **caractérisé en ce que**, lors de la fourniture de la pression d'assistance hydraulique ($p_U$), des tolérances de pression ($p_{tol}$) sont prises en compte.

7. Procédé selon l'une quelconque des revendications 1 à 6, **caractérisé en ce que** la valeur de pression ($\Delta p$) vaut entre 10 bars et 20 bars, de manière spécifique à l'application.

8. Appareil de régulation ou de commande pour mettre en oeuvre le procédé selon l'une quelconque des revendications 1 à 7, **caractérisé en ce que** des moyens d'augmentation d'une pression d'assistance ($p_U$) à générer dans le dispositif de freinage hydraulique d'une valeur de pression constante ($\Delta p$) par rapport à une pression d'arrêt ($p_{t,off}$), correspondant à la force de serrage hydraulique, à l'instant d'arrêt lors de la fourniture de la force de serrage hydraulique sont prévus.

9. Frein de stationnement dans un véhicule comprenant un dispositif de régulation ou de commande selon la revendication 8.

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10361042 B3